# EUROPÄISCHE PATENTANMELDUNG

(11) **EP 4 641 032 A1**
(43) Veröffentlichungstag der Anmeldung: **29.10.2025**
(21) Anmeldenummer: 24171751.1
(22) Anmeldetag: 22.04.2024
(51) Int. Cl.: F16B 7/04

(54) **VORRICHTUNG ZUR ANORDNUNG AN EINEM PROFIL ODER DERGLEICHEN MIT EINEM BEFESTIGUNGSELEMENT**

(71) Anmelder: Tobii Dynavox AB, 115 50 Stockholm (SE)
(72) Erfinder: Rabasse, Kenneth, 34414 Warburg (DE); Sprunck, Annemarie, 34266 Niestetal (DE); Mackerodt, Tim, 34121 Kassel (DE)
(74) Vertreter: Hannke Bittner & Partner mbB Regensburg

(57) **Zusammenfassung**

Die Erfindung betrifft eine Vorrichtung zur Anordnung einer Profilhalterung (1) an einem Halteelement (2), wobei die Profilhalterung (1) eine Profilaufnahme (3) aufweist, welche außerhalb einer Mittelachse (4) der Profilhalterung (1) angeordnet ist, und wobei die Profilhalterung (1) mit dem Halteelement (2) über eine in der Mittelachse (4) angeordnete Verbindung verbunden ist. Sie zeichnet sich dadurch aus, dass die Profilhalterung (1) und das Halteelement (2) zueinander weisende erste Anlageflächen (6) aufweisen, wobei zwischen Profilhalterung (1) und Halteelement (2) ein Distanzelement (5) angeordnet ist, welches sich an den ersten Anlageflächen (6) abstützt und über mit den ersten Anlageflächen (6) verbundenen Zentrierelementen (7) zur Mittelachse (4) fixiert ist.

## Beschreibung

Die Erfindung betrifft eine Vorrichtung zur Anordnung einer Profilhalterung an einem Halteelement nach dem Oberbegriff des Patentanspruchs 1. Dabei weist die Profilhalterung eine Profilaufnahme auf, welche außerhalb einer Mittelachse der Profilhalterung angeordnet ist, und wobei die Profilhalterung mit dem Halteelement über eine in der Mittelachse angeordnete Verbindung verbunden ist. Derartige Vorrichtungen kommen häufig im Pflegebereich zur Anwendung, wobei die Vorrichtung über das Halteelement an einer Pflegeeinrichtung, wie beispielsweise einem Rollstuhl, einem Bett, einem Beistelltisch oder dergleichen befestigt ist und an welcher über ein in der Profilaufnahme der Profilhalterung angeordnetes Profil eine Kommunikationseinrichtung, wie beispielsweise ein Tablet oder ein Smartphone, oder eine Betätigungseinrichtung befestigt werden kann. Grundsätzlich ist es im Stand der Technik so, dass derartige Befestigungen von einzelnen Kommunikationsbeziehungsweise Betätigungseinrichtungen sehr individuell sind und daher für jede Anwendung eine individuelle Lösung bereitgestellt wird. Insofern existieren eine Vielzahl von Gelenkverbindungen, um mit derartigen Gelenken die Kommunikationseinrichtungen entsprechend für den Patienten positionieren zu können.

So existieren allein im Produktprogramm der Firma Rehadapt eine Vielzahl verschiedener Gelenkverbindungen für Anwendungen im Bereich von Rollstühlen, Tischhalterungen, Betthalterungen, Wandhalterungen und dergleichen mehr (https://rehadapt.com/de/loesungen/).

Es ist daher Aufgabe der Erfindung, eine Vorrichtung nach dem Oberbegriff des Patentanspruchs 1 zur Verfügung zu stellen, mit welcher einer Vielzahl von Verbindungen realisiert werden können, wobei allerdings die Anzahl der Gleichteile erhöht wird, sodass eine Bevorratung verschiedenster Einzelteile vermieden werden kann und die Verwendung von Gleichteilen für die verschiedensten Verbindungen erhöht werden kann.

Gelöst wird diese Aufgabe durch eine Vorrichtung mit allen Merkmalen des Patentanspruchs 1. Vorteilhafte Ausgestaltungen der Erfindung finden sich in den Unteransprüchen.

Die erfindungsgemäße Vorrichtung zur Anordnung einer Profilhalterung an einem Halteelement weist dabei eine Profilaufnahme innerhalb der Profilhalterung auf, welche außerhalb einer Mittelachse der Profilhalterung angeordnet ist, wobei die Profilhalterung mit dem Halteelement über eine in der Mittelachse angeordnete Verbindung verbunden ist. Erfindungsgemäß ist es nun vorgesehen, dass die Profilhalterung und das Halteelement zueinander weisende erste Anlageflächen aufweisen, wobei zwischen Profilhalterung und Halteelement ein Distanzelement angeordnet ist, welches sich an den ersten Anlageflächen abstützt und über mit den ersten Anlageflächen verbundenen Zentrierelementen zur Mittelachse fixiert ist.

Durch die erfindungsgemäße Ausgestaltung der Vorrichtung ist es ermöglicht, die Profilhalterung und das Halteelement für verschiedenste Anwendungen mit unterschiedlichen Funktionen als jeweiliges Gleichteil herzustellen und die Distanz zwischen dem Halteelement und der Profilhalterung über das Distanzelement festzulegen. Dabei können für unterschiedliche Abstände zwischen Profilhalterung und Halteelement unterschiedliche Distanzelemente verwendet werden. Somit brauchen keine unterschiedlichen Halteelemente und Profilhalterungen vorgehalten werden. Lediglich die Verwendung unterschiedlicher Distanzelemente ist notwendig und somit auch nur eine Bevorratung verschiedener Distanzelemente, um verschiedenste Anwendungen betreffend unterschiedliche Funktionen mit unterschiedlichen Distanzen zwischen Profilhalterung und Halteelemente zu realisieren.

Um dabei das Distanzelement zwischen der Profilhalterung und dem Halteelement bezüglich der Mittelachse nicht nur in axialer, sondern auch in radialer Richtung der Vorrichtung zu fixieren, ist es vorgesehen, dass die ersten Anlageflächen mit Zentrierelementen verbunden sind, beziehungsweise Zentrierelemente auf den ersten Anlageflächen angeordnet sind, welche das jeweilige Distanzelement zur Mittelachse fixieren, sodass es in radialer Richtung nicht mehr verschiebbar ist. Durch die erfindungsgemäße Ausgestaltung der Vorrichtung zur Anordnung einer Profilhalterung an einem Halteelement wird nicht nur ein zusätzlicher Logistikaufwand vermieden, der sowohl aus ökologischer als auch aus ökonomischer Sicht nachteilig wäre. Vielmehr wird durch eine derartige Ausgestaltung der Vorrichtung auch eine ressourcenschonende Vorgehensweise sowohl hinsichtlich der einzusetzenden Rohstoffe als auch hinsichtlich finanzieller Mittel erreicht.

Nach einer ersten vorteilhaften Ausgestaltung der Erfindung ist es vorgesehen, dass die Zentrierelemente zweite Anlageflächen aufweisen, zwischen denen ein Friktionselement derart angeordnet ist, dass es an den zweiten Anlageflächen anliegt. Das Friktionselement kann dabei derart ausgestaltet sein, dass ein gleitendes Drehen der Profilhalterung auf dem Halteelement möglich ist oder der Friktions- beziehungsweise Reibungswiderstand so groß ist, dass ein Drehen der Profilhalterung auf dem Halteelement nur durch erhöhten Kraftaufwand möglich ist. Durch die Verwendung eines derartigen Friktionselementes ist es ermöglicht, die Profilhalterung und das Halteelement mit unterschiedlichen Drehwiderständen gegeneinander zu verdrehen. Dies ist allein durch die Verwendung verschiedener Friktionselemente möglich, ohne dass andere Bauteile der erfindungsgemäßen Vorrichtung ersetzt, ausgetauscht oder abgeändert werden müssen. Als Friktionselemente können beispielsweise Reibscheiben oder auch verschiedene Lager verwendet werden, die zwischen den zweiten Anlageflächen der Profilhalterung und dem Halteelement angeordnet sind und durch welche unterschiedliche Reib- beziehungsweise Gleitwiderstände realisiert werden.

Nach einer weiteren vorteilhaften Ausgestaltung der Erfindung ist es vorgesehen, dass die Zentrierelemente jeweils als Zahnkranz ausgebildet sind, dessen Zähne zumindest teilweise in auf einer Innenseite des Distanzelementes angeordnete Zähne beziehungsweise Ausnehmungen eingreifen. Dabei ist es in einer ersten Ausgestaltung vorgesehen, dass sowohl die Zahnkränze der Zentrierelemente als auch die Zähne beziehungsweise Ausnehmungen des Distanzelementes starr ausgebildet sind. Durch eine derartige Ausgestaltung des Distanzelementes ist erreicht, dass sich die Profilhalterung gegenüber dem Halteelement nicht mehr verdrehen lässt, wenn ein derartig ausgebildetes Distanzelement zwischen Profilhalterung und Halteelement angeordnet ist, wobei Profilhalterung und Halteelement miteinander verbunden sind. Insofern lassen sich Profilhalterung und Halteelement dann nicht mehr kontinuierlich gegeneinander verdrehen. Vielmehr sind dann nur vorbestimmte Winkeleinstellungen durch die spezielle Ausgestaltung der ineinandergreifenden Zähne des Distanzelementes und der Profilhalterung beziehungsweise des Halteelementes möglich.

Dies steht im Gegensatz zu einer Ausgestaltung des Distanzelementes als Ring, der auf seiner Innenseite glatt ausgebildet ist. Ein derartig ausgebildetes Distanzelement ermöglicht es, dass sich die Profilhalterung und das Halteelement nach dem Verbinden kontinuierlich zwischen 0°und 360°gegeneinander verdrehen lassen. Der Drehwiderstand wird dabei durch das optionale Zwischenlegen des bereits erwähnten Friktionselementes im Zusammenspiel mit dem Verbindungsmoment einer zentralen Verbindung der Profilhalterung mit dem Halteelement im Bereich der Mittelachse eingestellt.

Nach einer weiteren vorteilhaften Ausgestaltung der Erfindung ist das Distanzelement als Ring mit an seiner Innenseite angeordneten Rastelementen ausgebildet. Derartige Rastelemente können beispielsweise die bereits zuvor beschriebenen Zähne beziehungsweise Ausnehmungen des Distanzelementes darstellen, die im Gegensatz zu einer starren Ausbildung flexibel ausgebildet sind und bei einem Verdrehen der Profilhalterung gegenüber dem Halteelement ein Überspringen der Zähne der Zahnkränze der Zentrierelemente der Profilhalterung und/oder des Halteelementes ermöglichen. Alternativ ist es auch möglich, dass die Zähne der Zahnkränze des Zentrierelementes flexibel ausgebildet sind, während die Zähne des Distanzelementes als starre Zähne ausgebildet sind, über welche die flexiblen Zähne der Zahnkränze der Zentrierelemente von Profilhalterung und Halteelemente beim Verdrehen dieser Elemente gegeneinander überspringen. Eine derartige Ausgestaltung der Vorrichtung mit Rastfunktion ermöglicht ein Einstellen der Profilhalterung gegenüber dem Halteelement in vorbestimmten Winkeln, die auch noch nach dem Verbinden von Profilhalterung und Halteelement eingestellt werden können. Eine kontinuierliche Winkeleinstellung ist mit einer derartigen Ausgestaltung nicht möglich. Durch die zentrale Verbindung der Profilhalterung mit dem Halteelement im Bereich der Mittelachse lässt sich durch deren Anziehen eine bestimmte Abstufung des Drehwiderstandes erreichen, welche gegebenenfalls ebenfalls noch durch ein Friktionselement wie beispielsweise einer Reibscheibe optimiert wird. Hierdurch ist es möglich, den Drehwiderstand bei einer Vorrichtung mit Rastfunktion entsprechend den gewünschten Gegebenheiten einzustellen.

In einer weiteren vorteilhaften Ausgestaltung der Erfindung ist es vorgesehen, dass an dem Halteelement gegenüber der ersten Anlagefläche eine weitere Anlagefläche angeordnet ist, mit welcher es auf einer Anlagefläche eines anderen Gegenstandes anordenbar ist. Durch diese Ausgestaltung der Erfindung ist es ermöglicht, die Vorrichtung an einem anderen Gegenstand zu befestigen, in dem die Vorrichtung mit der weiteren Anlagefläche des Halteelementes an einer Anlagefläche des anderen Gegenstandes anordenbar und beispielsweise mittels einer Schraubverbindung mit diesem Gegenstand unverlierbar, aber lösbar verbunden werden kann.

Um dabei eine genaue Anordnung der Vorrichtung an dem weiteren Gegenstand zu ermöglichen, kann es vorgesehen sein, dass die weitere Anlagefläche des Halteelementes der Vorrichtung Positionierungselemente, wie beispielsweise konzentrische Kreise aufweisen, die in konzentrische Kreise der Anlagefläche des weiteren Gegenstandes, an dem die Vorrichtung befestigt werden soll, eingreifen. Diese Positionierungselemente der Anlageflächen dienen dazu, die Vorrichtung exakt auf dem Gegenstand, an dem sie befestigt werden soll, zu positionieren. Natürlich sind auch andere Positionierungselemente als konzentrische Kreise denkbar. Wesentlich ist dabei nur, dass eine exakte Positionierung der Vorrichtung gegenüber dem Gegenstand, an dem sie befestigt werden soll, ermöglicht ist.

Nach einer anderen vorteilhaften Ausgestaltung der Erfindung weist das Halteelement wenigstens eine, vorzugsweise zwei Öffnungen auf, welche sich von der ersten beziehungsweise zweiten Anlagefläche bis zur weiteren Anlagefläche erstreckt und welche in einer weiteren Ausgestaltung im Bereich der weiteren Anlagefläche flächenmäßig kleiner als im Bereich der ersten Anlagefläche ausgebildet ist. Dies bedeutet, dass der Querschnitt dieser Öffnungen im Bereich der weiteren Anlagefläche kleiner ist als im Bereich der ersten Anlagefläche. Hierdurch ist ermöglicht, dass das Halteelement beispielsweise mit Schrauben an dem weiteren Gegenstand befestigt werden kann. Dazu ist es notwendig, dass in dem weiteren Gegenstand entsprechende Gewinde eingearbeitet sind, in welche diese Schrauben dann eingreifen können. Natürlich ist es auch denkbar, dass an dem weiteren Gegenstand Öffnungen zum Durchführen von Schrauben angeordnet sind, wobei dann im Halteelement entsprechende Gewinde zum Eingriff der Schraubenvorgesehene sind.

In einer weiteren Ausgestaltung der Erfindung ist es vorteilhafterweise vorgesehen, dass die in der Mittelachse angeordnete Verbindung aus einer durch die Profilhalterung beziehungsweise das Halteelement durchgreifende Schraube und ein in dem Halteelement beziehungsweise der Profilhalterung angeordneten Gewinde, in welches die Schraube eingreift, gebildet ist. Derartige Schraubverbindungen ermöglichen ein sicheres unverlierbares aber lösbares Verbinden von Profilhalterung und Halteelement. Dabei kann das Gewinde direkt in das Halteelement eingeschnitten sein oder aber es ist eine Gewindebuchse in das Halteelement eingelassen. Zudem ist über eine derartige Schraubverbindung ein entsprechendes Moment einstellbar, mit welchem der Drehwiderstand bei einem Distanzelement mit kontinuierlicher Verdrehbarkeit von Profilhalterung und Halteelement beziehungsweise bei einer Vorrichtung mit Rastfunktion einstellbar ist. Hierzu wird durch das Anziehen der Schraubverbindungen ein zwischen Profilhalterung und Halteelement angeordnetes Friktionselement, wie beispielsweise eine Reibscheibe, entsprechend belastet, wodurch sich der Drehwiderstand erhöht. Auch bei anderen Friktionselementen wie beispielsweise Lagerelementen kann dadurch der Drehwiderstand reguliert werden. Wesentlich ist dabei, dass Haltelement unverlierbar mit der Profilhalterung verbunden ist.

In einer besonders vorteilhaften Ausgestaltung der Erfindung ist es vorgesehen, dass das Halteelement ebenfalls als eine Profilhalterung mit einer Profilaufnahme ausgebildet ist, welche außerhalb einer Mittelachse der Profilhalterung angeordnet ist. Eine derartige Ausgestaltung der Erfindung ermöglicht es, zwei Profile gegeneinander zu fixieren, wobei ebenfalls eine kontinuierliche Verdrehbarkeit, eine Rastfunktion oder eine feste Fixierbarkeit der Profile gegeneinander möglich ist. Bei einer kontinuierlichen Verdrehbarkeit können alle Winkel zwischen 0° und 360° zwischen den Profilen, welche in die beiden Profilhalterungen aufgenommen sind, eingestellt werden. Durch eine derartige Ausgestaltung der Erfindung und die damit verbundene Aufnahme der Profile außerhalb der Mittelachse der Profilhalterungen wird ein Tangentialgelenk realisiert, bei dem zwischen den beiden Profilen, die durch die Vorrichtung gehalten werden, unterschiedliche Winkeleinstellungen zwischen 0° und 360° realisiert werden können. Derartige Tangentialgelenke können dazu verwendet werden, die Profile an unterschiedlichen Gegenständen zu befestigen oder auch unterschiedliche Gegenstände an den Profilen zu befestigen. Hierdurch ist ermöglicht, durch Kombination mehrerer erfindungsgemäßen Vorrichtungen entsprechende Aufnahmen für Gegenstände zu realisieren, wobei die erfindungsgemäßen Vorrichtungen dabei an weiteren Gegenständen unverlierbar angeordnet werden können.

Nach einer weiteren vorteilhaften Ausgestaltung der Erfindung ist es vorgesehen, dass die Profilaufnahmen der Profilhalterungen zur klemmenden Aufnahme von Profilen ausgebildet sind. Dabei kann ein Profil in die Profilaufnahme der jeweiligen Profilhalterungen eingeführt beziehungsweise eingelegt werden, wobei dann mittels Verstellmittel der Querschnitt der Profilaufnahme verkleinert werden kann, sodass ein in der Profilaufnahme aufgenommenes Profil in der Profilhalterung eingeklemmt und somit fixiert wird. Derartige Verstellmittel können beispielsweise Schraubverbindungen sein, welche beispielsweise zwei Schenkel einer Profilaufnahme gegeneinander ziehen und somit eine Klemmwirkung für ein in die Profilaufnahme aufgenommenes Profil realisieren.

Dabei sind die Profilhalterungen vorteilhafterweise aus einem Oberteil und einem Unterteil gebildet, welche vorzugsweise mittels wenigstens zwei Verstellmitteln gegeneinander bewegbar ausgebildet sind, um einen Querschnitt der Profilaufnahme zu variieren. Durch eine derartige Ausgestaltung der Erfindung wird in einfacher Weise ein Klemmmechanismus für in die Profilhalterungen aufgenommene Profile realisiert, der ein sicheres Aufnehmen und Fixieren der Profile in den Profilhalterungen gewährleistet.

Dabei kann es zum einen vorgesehen sein, dass das Oberteil und das Unterteil der Profilhalterungen einteilig ausgebildet sind. In einer derartigen Ausgestaltung bilden das Ober- und das Unterteil gegeneinander bewegbare Schenkel, welche durch die Verstellmittel, beispielsweise Schrauben, gegeneinander bewegt werden können, sodass der Querschnitt der Profilaufnahme variiert werden kann und somit eine Klemmwirkung für darin aufgenommene Profile erzeugt wird.

In einer anderen Ausgestaltung der Erfindung ist es auch möglich, dass das Oberteil und das Unterteil der Profilhalterungen mehrteilig ausgebildet sind, insbesondere zweiteilig. Dabei wird ein einteiliges Oberteil an einem einteiligen Unterteil befestigt und eine Profilaufnahme gebildet, in welchem ein Profil aufgenommen werden kann. Auch hierbei können das Oberteil und das Unterteil Schenkel bilden, die durch Verstellmittel wie Schrauben gegeneinander bewegt werden können, sodass eine Querschnittsänderung der Profilaufnahme erzielt werden kann. Hierdurch wird wiederum ermöglicht, dass Profile zwischen dem Oberteil und dem Unterteil in der Profilhalterung in der Profilaufnahme eingeklemmt werden können.

Grundsätzlich ist es dabei möglich, dass die Profilaufnahmen der Profilhalterung zur Aufnahme von im Querschnitt runden, ovalen oder eckigen Profilen ausgebildet sind. Hierdurch ist ermöglicht, dass hinsichtlich der aufzunehmenden Profile keine Einschränkungen bestehen. Dabei ist es möglich, dass Profile mit unterschiedlichen Querschnitten und insbesondere bei Verwendung von runden Profilen auch Profile mit unterschiedlichen Durchmessern in den verschiedenen Profilhalterungen beziehungsweise deren Profilaufnahmen einklemmbar sind.

Bei Verwendung eines Tangentialgelenks, bei dem auch das Halteelement der Vorrichtung als Profilhalterung ausgebildet ist, besteht das Tangentialgelenk im Wesentlichen aus zwei gleichen Hälften, die zentral miteinander verbunden sind. Zwischen den beiden Hälften des Gelenks befindet sich dabei das Distanzelement sowie optional ein Friktionselement.

Weitere Ziele, Vorteile, Merkmale und Anwendungsmöglichkeiten der vorliegenden Erfindung ergeben sich aus der nachfolgenden Beschreibung der Ausführungsbeispiele anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1:: ein erstes Ausführungsbeispiel einer erfindungsgemäßen Vorrichtung in verschiedenen Darstellungen,
- Figur 2:: ein zweites Ausführungsbeispiel einer erfindungsgemäßen Vorrichtung in verschiedenen Darstellungen,
- Figur 3:: ein drittes Ausführungsbeispiel einer erfindungsgemäßen Vorrichtung in verschiedenen Darstellungen,
- Figur 4:: ein viertes Ausführungsbeispiel einer erfindungsgemäßen Vorrichtung in verschiedenen Darstellungen und
- Figur 5:: verschieden Ausführungsformen eines Distanzelementes einer erfindungsgemäßen Vorrichtung.

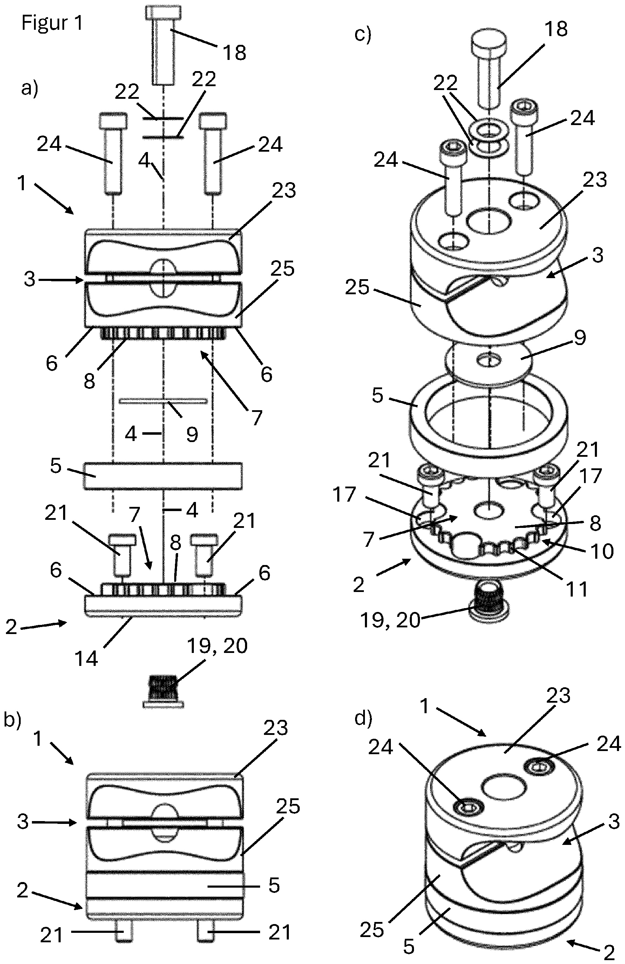

In der Figur 1 ist ein erstes Ausführungsbeispiel einer erfindungsgemäßen Vorrichtung in verschiedenen Darstellungen gezeigt. Die Figur 1a der Vorrichtung zeigt eine Explosionsdarstellung in einer Seitenansicht, während die Figur 1b die Seitenansicht zeigt. Die Figur 1c zeigt wiederum eine Explosionsdarstellung des Ausführungsbeispiels der erfindungsgemäßen Vorrichtung in einer Explosionsdarstellung in einer perspektivischen Ansicht, während Figur 1d die perspektivische Ansicht dieses Ausführungsbeispiels zeigt.

Die wesentlichen Elemente der erfindungsgemäßen Vorrichtung sind dabei eine Profilhalterung 1 und ein Halteelement 2, zwischen denen ein Distanzelement 5 angeordnet ist. Das Distanzelement 5 stützt sich im zusammengebauten Zustand der Vorrichtung, die in den Figuren 1b) und 1 d) dargestellt ist, an ersten Anlageflächen 6 der Profilhalterung 1 und des Halteelementes 2 ab.

Das Halteelement 2 weist im Bereich der ersten Anlagefläche 6 ein Zentriermittel 7 auf, welches zu einer Mittellängsachse 4 fixiert ist beziehungsweise darauf angeordnet ist, sodass ein radiales Bewegen der Zentriermittel 7 gegenüber der Mittelachse 4 nicht möglich ist. Vorteilhafterweise ist das Halteelement 2 mit dem Zentriermittel 7 einstückig ausgebildet, was allerdings bei anderen Ausführungsbeispielen nicht der Fall sein muss.

Ferner weist das Halteelement 2 im Bereich des Zentrierelementes 7 beziehungsweise der ersten Anlagefläche 6 zwei durchgehende Öffnungen auf, welche dazu dienen, zwei Schrauben 21 aufzunehmen, mit deren Hilfe das Halteelement 2 an einem weiteren hier nicht gezeigten Gegenstand befestigt werden kann. Dazu sind in dem Drittgegenstand entsprechende Gewinde vorgesehen, in welche die Schrauben 21 eingreifen. Beim Verbinden des Halteelementes 2 mit einem derartigen Drittgegenstand wird eine gegenüber der ersten Anlagefläche 6 angeordnete weitere Anlagefläche 14 auf einer Anlagefläche des Drittgegenstandes positioniert. Um dabei ein exaktes Positionieren zu ermöglichen, kann es vorgesehen sein, dass sowohl an der Anlagefläche 14 des Haltelementes 2 als auch an der Anlagefläche des Drittgegenstandes Positionierungselemente, wie beispielsweise konzentrische Ringe, die ineinander eingreifen, vorgesehen sind. Derartige Positionierungselemente ermöglichen ein exaktes Positionieren des Halteelementes 2 und damit der gesamten Vorrichtung auf beziehungsweise an dem Drittgegenstand.

Ferner enthält das Halteelement 2 eine zentrale, in der Mittelachse 4 liegende Öffnung, in welcher eine Gewindebuchse 20 mit einem Gewinde 19 angeordnet ist. Diese Gewindebuchse 20 dient dazu, dass das Halteelement mit der Profilhalterung 1 verbunden werden kann. Dazu ist in der Profilhalterung 1 ebenfalls eine zentrale Öffnung im Bereich der Mittelachse vorgesehen, durch welche eine Schraube 18 hindurchgreift, welche mit ihrem Außengewinde in das Innengewinde 19 der in dem Halteelement angeordneten Gewindebuchse 20 eingreift. Grundsätzlich ist es allerdings auch möglich, dass das Gewinde 19 direkt in das Halteelement 2 eingebracht ist, ohne dass dabei eine Gewindebuchse zum Einsatz kommt. Das Halteelement 2 ist dabei mittels des Distanzelementes 5 von der Profilhalterung 1 beabstandet, wobei das Distanzelement 5 sowohl durch das Zentrierelement 7 des Halteelementes 2 als auch ein auf einer ersten Anlagefläche 6 der Profilhalterung 1 angeordnetes Zentrierelement 7 radial fixiert ist, sodass sich das Distanzelement 5 im Bezug zur Mittelachse weder radial noch axial bewegen kann. Dies wird insbesondere in den Darstellungen der Figuren 1b und 1d verdeutlicht.

Wie insbesondere aus der Figur 1c zu entnehmen ist, ist das Distanzelement 5 in diesem Ausführungsbeispiel als Ringelement mit einer glatten Innenfläche ausgeführt. Wie ebenfalls insbesondere der Figur 1c zu entnehmen ist, sind das Zentrierelement 7 des Halteelementes 2 und auch das Zentrierelement 7 der Profilhalterung 1 als Zahnkranz 10 mit einer Vielzahl von Zähnen ausgebildet. In diesem Ausführungsbeispiel haben die Zähne 11 des Zahnkranzes 10 außer der radialen Fixierung des als Ringelement ausgebildeten Distanzelementes 5 keine weitere Funktion. Das Distanzelement 5 ist dabei drehbar zwischen Profilhalterung 1 und Halteelement 2 angeordnet.

Die Profilhalterung 1 weist zudem eine Profilaufnahme 3 auf, in welche ein hier nicht dargestelltes Profil aufnehmbar ist. Im vorliegenden Fall ist die Profilaufnahme 3 kreisrund zur Aufnahme eines im Querschnitt runden Profils ausgebildet. Die Profilaufnahme 3 wird dabei durch ein Oberteil 23 und ein Unterteil 25 der Profilhalterung 1 gebildet. Das Unterteil 25 und das Oberteil 23 der Profilhalterung 1 können dabei mittels Verstellmittel 24 in Form von Schrauben gegeneinander bewegt werden, sodass sich der Querschnitt der Profilaufnahme 3 verändern lässt und somit ein Profil in der Profilaufnahme 3 zwischen dem Oberteil 23 und dem Unterteil 25 der Profilhalterung 1 eingeklemmt werden kann.

Für die Schraube 18 zum Verbinden der Profilhalterung 1 mit dem Halteelement 2 sind zudem noch zwei Unterlegscheiben 22 vorgesehen.

Um den Drehwiderstand zwischen Profilhalterung 1 und Halteelement 2 regulieren zu können ist zwischen den Zentrierelementen 7 der Profilhalterung 1 und des Halteelementes 2 ein Friktionselement 9 in Form einer Reibscheibe zwischen Anlageflächen 8 angeordnet. Durch das Friktionselement 9 und das Anziehen der Schraube 18 kann der Drehwiderstand zwischen Profilhalterung und Halteelement eingestellt werden. Bei diesem Ausführungsbeispiel ist es aufgrund des als glatter Ring ausgebildeten Distanzelementes 5 möglich, eine kontinuierliche Winkeleinstellung zwischen Profilhalterung 1 und Halteelement 2 und somit für ein in der Profilhalterung 1 aufgenommenes Profil zu realisieren.

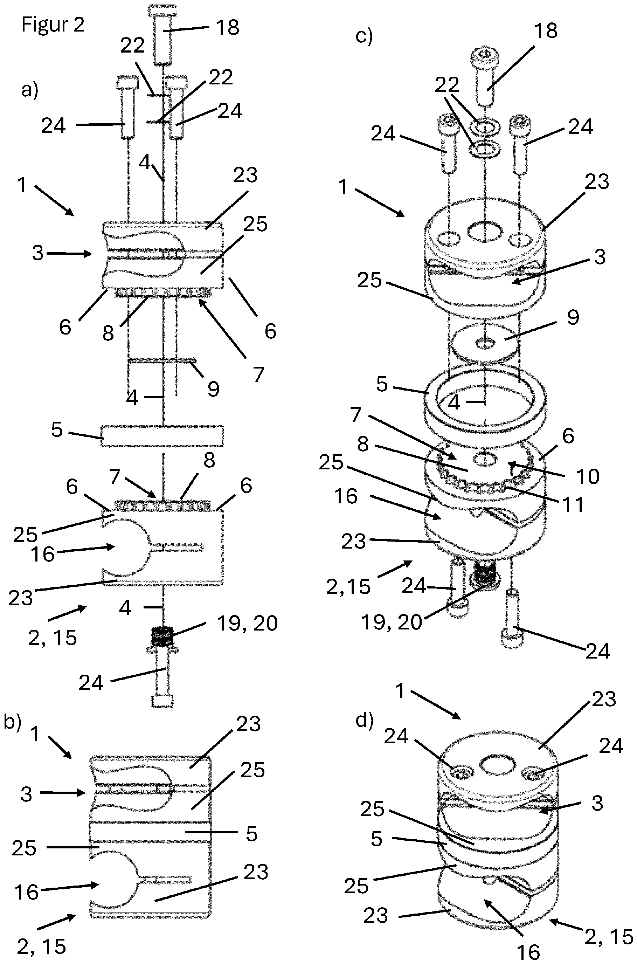

In der Figur 2 ist nunmehr ein zweites Ausführungsbeispiel einer erfindungsgemäßen Vorrichtung in verschiedenen Darstellungen gezeigt. Im Gegensatz zu dem Ausführungsbeispiel der Figur 1 ist hierbei das Halteelement 2 ebenfalls als eine Profilhalterung 15 ausgebildet, die im Wesentlichen der Ausbildung der Profilhalterung 1 sowohl dieses Ausführungsbeispiels als auch des der Figur 1 entspricht. Bei diesem Ausführungsbeispiel können also zwei Profile miteinander verbunden werden, die jeweils in eine der Profilhalterungen 1 beziehungsweise 15 aufgenommen sind. Ansonsten entspricht dieses Ausführungsbeispiel dem Ausführungsbeispiel der Figur 1, sodass ein kontinuierliches Verdrehen der beiden Profilhalterungen 1 und 15 gegeneinander ermöglicht ist. Hierdurch können in den Profilhalterungen 1 und 15 aufgenommene Profile kontinuierlich in einem Winkel zwischen 0° und 360° gegeneinander eingestellt werden. Der Drehwiderstand lässt sich dabei wieder über in zwischen den beiden Profilhalterungen 1 und 15 angeordneten Friktionselementen 9 in Form einer Reibscheibe und der Verbindungsschraube 18 einstellen.

Bei dem Ausführungsbeispiel der Figur 2 ist es nunmehr nicht möglich, das Halteelement 2 in Form der Profilaufnahme 15 über eine Anlagefläche an einem Drittgegenstand zu befestigen. Eine Befestigung an einem Drittgegenstand ist aber über ein in einer Profilaufnahme 16 der Profilhalterung 15 eingeklemmtes beziehungsweise aufgenommenes Profil möglich.

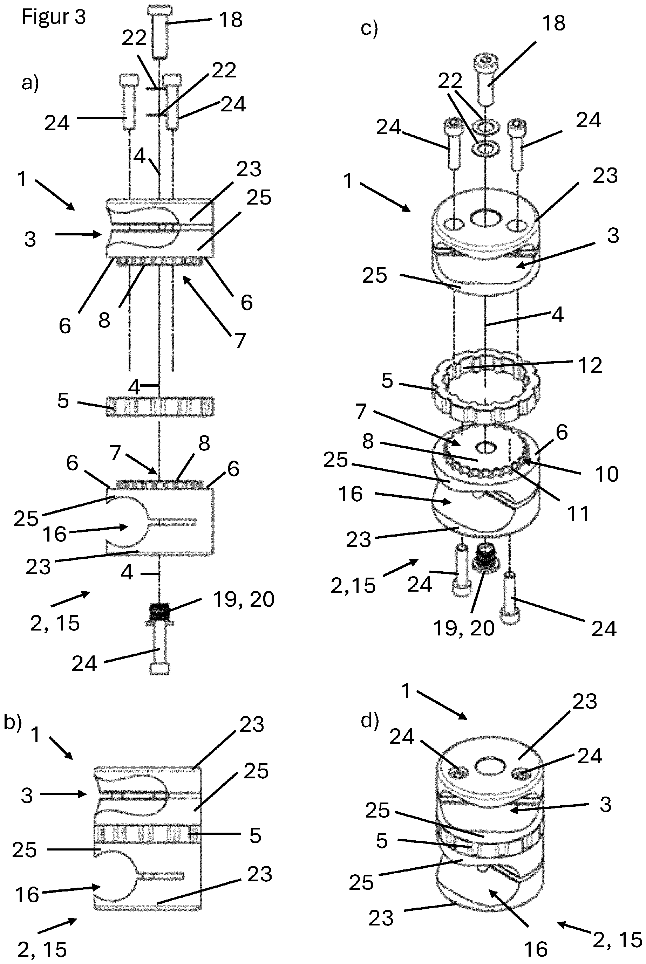

Ein drittes Ausführungsbeispiel ist in der Figur 3 dargestellt, dass wiederum mehrere Darstellungen in verschiedenen Ansichten zeigt. Dieses Ausführungsbeispiel entspricht im Wesentlichen dem der Figur 2, wobei im Unterschied zu dem Ausführungsbeispiel der Figur 2 ein anderes Distanzelement 5 zum Einsatz kommt. Das Distanzelement 5 weist in diesem Ausführungsbeispiel ebenfalls Zähne 12 an seiner Innenseite auf, welche in Zähne 11 des Zahnkranzes 10 der Zentrierelemente 7 der Profilhalterung 1 und des als Profilhalterung 15 ausgebildeten Halteelementes 2 eingreifen. Durch eine derartige Ausgestaltung des Distanzelementes 5 ist es ermöglicht, bestimmte Winkeleinstellungen zwischen den beiden Profilhalterungen 1 und 15 beziehungsweise den darin aufgenommenen Profilen zu realisieren, die sich nach Verbinden der beiden Profilhalterungen 1 und 15 nicht mehr gegeneinander verdrehen lassen. Durch den Eingriff der Zähne 12 und 11 ineinander wird somit ein Verdrehen der Profilhalterungen 1 und 15 gegeneinander unterbunden. In Folge der festen Winkeleinstellung der beiden Profilhalterungen 1 und 15 beziehungsweise der darin aufgenommenen Profile zueinander ist in diesem Ausführungsbeispiel natürlich auch kein Friktionselement notwendig, das zwischen den beiden Profilhalterungen 1 und 15 zur Regulierung eines Drehwiderstandes angeordnet werden muss.

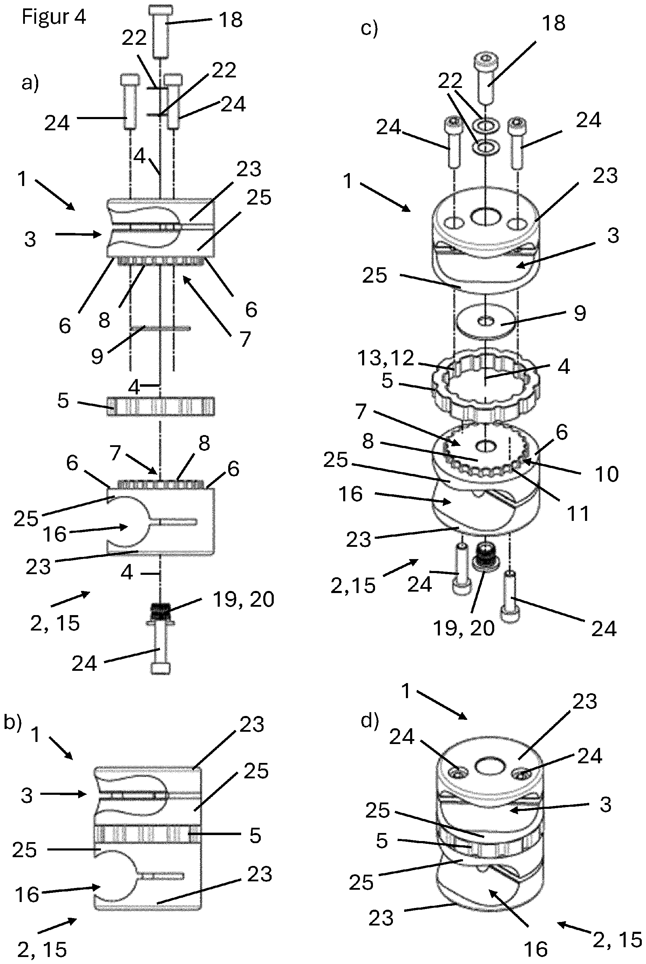

In dem weiteren Ausführungsbeispiel der Figur 4, das in seiner Ausgestaltung dem der Figur 3 entspricht, sind wiederum verschiedene Darstellungen gezeigt. Wesentlicher Unterschied zu dem Ausführungsbeispiel der Figur 3 ist dabei, dass die Zähne 12 des hiesigen Distanzelementes 5 als Rastelemente 13 beweglich ausgebildet sind. Insofern können die beiden Profilhalterungen 1 und 15 mit dem darin aufgenommenen Profilen nach dem Verbinden über die Schraube 18 und der Gewindebuchse 20 samt Gewinde 19 immer noch gegeneinander verdreht werden, da durch die beweglich Ausgestaltung der Zähne 12 des Distanzelementes 5 diese sich bewegen können und so beim Überschreiten eines gewissen Widerstandes beim Verdrehen der beiden Profilhalterungen 1 und 15 gegeneinander über die Zähne 11 der Zahnkränze 10 der beiden Profilhalterungen 1 und 15 springen können. Um dabei den Drehwiderstand weiter regulieren zu können, ist bei diesem Ausführungsbeispiel wiederum ein Friktionselement 9 in Form einer Reibscheibe zwischen den beiden Profilhalterungen 1 und 15 vorgesehen, welche sich wiederum an den zweiten Anlageflächen 8 der Profilhalterungen 1 und 15 abstützt. Durch dieses Friktionselement 9 und ein entsprechendes Anziehen der Schraube 18 zum Verbinden der beiden Profilhalterungen 1 und 15 lässt sich somit der Drehwiderstand der beiden Profilhalterungen gegeneinander einstellen.

Bei diesem Ausführungsbeispiel lassen sich wiederum verschiedene Winkel zwischen dem in den beiden Profilhalterungen 1 und 15 aufgenommenen Profilen im Bereich zwischen 0° und 360° realisieren. Allerdings ist hierbei keine kontinuierliche Einstellung des Winkels möglich, sondern durch die Rastfunktion nur bestimmte voreingestellte Winkel.

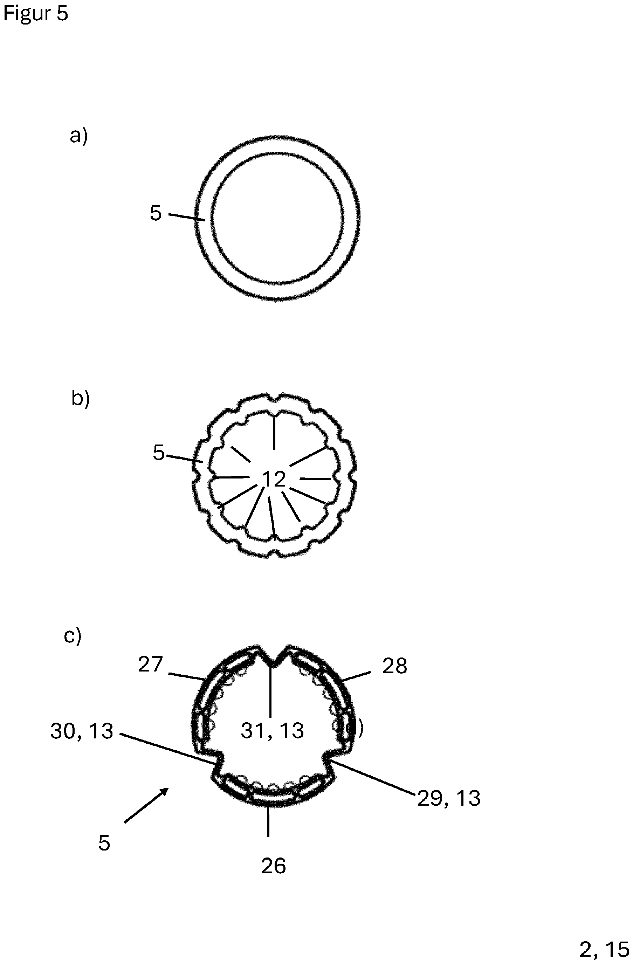

In der Figur 5 sind nunmehr nochmals unterschiedliche Distanzelemente dargestellt, die unterschiedliche Funktionen erfüllen. Dabei ist in Figur 5a wiederum das als einfacher Ring ausgebildete Distanzelement 5 dargestellt, wie er bereits im Ausführungsbeispiel der Figuren 1 und 2 verwendet wird und mit dem ein kontinuierliches Verdrehen der Profilhalterung 1 und des Halteelementes 2 im Bereich zwischen 0° und 360° ermöglicht ist., Im Gegensatz dazu wird in Figur 5b ein Distanzelement 5 zur festen Einstellung verschiedener Winkel zwischen Profilhalterung 1 und Halteelement 2 gezeigt.

In dem Ausführungsbeispiel der Figur 5b sind dabei die Zähne 12 des Distanzelementes 5 starr ausgebildet, sodass sie unbeweglich sind. Grundsätzlich können diese Zähne 12 auch beweglich ausgebildet sein, sodass ein Verdrehen von Profilhalterung 1 gegenüber Halteelement 2 ermöglicht ist, da dann die Zähne 11 der Zahnkränze 10 der Zentrierelemente 7 der Profilhalterung 1 und des Halteelements 2 durch die Zähne 12 des Distanzelementes übersprungen werden. Grundsätzlich ist auch möglich, die Zähne 11 der Zahnkränze 10 der Zentrierelemente 7 des Halteelementes 2 und der Profilhalterung 1 flexibel auszubilden, um eine Rastfunktion zu realisieren, wobei dann die Zähne 12 des Distanzelementes 5 wiederum starr ausgebildet sind. Das Distanzelement 5 der Figur 5b ist auf seiner Außenseite geriffelt ausgebildet. Dies Ausführung dient in erster Linie dazu, bei Verwendung eines derartigen Distanzelementes ein haptisches Feedback für den Benutzer zu erzeugen und auch ein optischen Unterscheiden zu dem Distanzelement der Figur 5a zu ermöglichen.

Figur 5c zeigt nun ein weiteres Distanzelement 5, mit einer Rastfunktion. Hierbei ist das gesamte Distanzelement 5 durch die geometrische Ausgestaltung flexibel ausgebildet, sodass die dortigen Kreiselemente 26, 27 und 28, die durch als Rastelemente 13 ausgebildeten Verbindungselemente 29, 30, 31 miteinander verbunden sind gegeneinander bewegbar sind. Beim Verdrehen des Halteelementes 2 gegenüber der Profilhalterung 1 wird dann das gesamte Distanzelement verformt, sodass die Zähne 11 der Zahnkränze 10 des Halteelementes 2 beziehungsweise der Profilhalterung 1 von den als Rastelemente 13 ausgebildeten Verbindungselemente 29, 30 und 31 des Distanzelementes 5 übersprungen werden.

### Bezugszeichenliste

- 1: Profilhalterung
- 2: Halteelement
- 3: Profilaufnahme
- 4: Mittelachse
- 5: Distanzelement
- 6: Anlagefläche
- 7: Zentrierelement
- 8: Anlagefläche
- 9: Friktionselement
- 10: Zahnkranz
- 11: Zähne
- 12: Zähne
- 13: Rastelement
- 14: Anlagefläche
- 15: Profilhalterung
- 16: Profilaufnahme
- 17: Öffnung
- 18: Schraube
- 19: Gewinde
- 20: Gewindebuchse
- 21: Schraube
- 22: Unterlegscheibe
- 23: Oberteil
- 24: Verstellmittel
- 25: Unterteil
- 26: Kreiselement
- 27: Kreiselement
- 28: Kreiselement
- 29: Verbindungselement
- 30: Verbindungselement
- 31: Verbindungselement

## Patentansprüche

1. Vorrichtung zur Anordnung einer Profilhalterung (1) an einem Halteelement (2), wobei die Profilhalterung (1) eine Profilaufnahme (3) aufweist, welche außerhalb einer Mittelachse (4) der Profilhalterung (1) angeordnet ist, und wobei die Profilhalterung (1) mit dem Halteelement (2) über eine in der Mittelachse (4) angeordnete Verbindung verbunden ist, **dadurch gekennzeichnet, dass** die Profilhalterung (1) und das Halteelement (2) zueinander weisende erste Anlageflächen (6) aufweisen, wobei zwischen Profilhalterung (1) und Halteelement (2) ein Distanzelement (5) angeordnet ist, welches sich an den ersten Anlageflächen (6) abstützt und über mit den ersten Anlageflächen (6) verbundenen Zentrierelementen (7) zur Mittelachse (4) fixiert ist.

2. Vorrichtung nach Anspruch 1, **dadurch gekennzeichnet, dass** die Zentrierelemente (7) zweite Anlageflächen (8) aufweisen, zwischen denen ein Friktionselement (9) derart angeordnet ist, dass es an den zweiten Anlageflächen (8) anliegt.

3. Vorrichtung nach Anspruch 1 oder 2, **dadurch gekennzeichnet, dass** die Zentrierelemente (7) jeweils als Zahnkranz (10) ausgebildet sind, dessen Zähne (11) zumindest teilweise in auf einer Innenseite des Distanzelementes (5) angeordnete Zähne (12) eingreifen.

4. Vorrichtung nach Anspruch 1 oder 2, **dadurch gekennzeichnet, dass** die Zentrierelemente (7) jeweils als Zahnkranz (10) ausgebildet sind, dessen Zähne (11) zumindest teilweise in auf einer Innenseite des Distanzelementes (5) angeordnete Rastelemente (13) eingreifen.

5. Vorrichtung nach Anspruch 4, **dadurch gekennzeichnet, dass** das Distanzelement (5) als Ring mit an seiner Innenseite angeordneten Rastelementen (13) ausgebildet ist

6. Vorrichtung nach einem der vorhergehenden Ansprüche, **dadurch gekennzeichnet, dass** an dem Halteelement (2) gegenüber der ersten Anlagefläche (6) eine weitere Anlageflächen (14) angeordnet ist, mit welcher es auf einer Anlagefläche eines anderen Gegenstandes anordenbar ist.

7. Vorrichtung nach Anspruch 6, **dadurch gekennzeichnet, dass** das Halteelement (2) wenigstens eine Öffnung (17) aufweist, welche sich von der ersten Anlagefläche (6) beziehungsweise zweiten Anlagefläche (8) bis zur weiteren Anlagefläche (14) erstreckt und welche in Bereich der weiteren Anlagefläche (14) flächenmäßig kleiner als im Bereich der ersten Anlagefläche (6) ausgebildet ist.

8. Vorrichtung nach einem der vorhergehenden Ansprüche, **dadurch gekennzeichnet, dass** die in der Mittelachse (4) angeordnete Verbindung aus einer durch das die Profilhalterung (1) beziehungsweise das Halteelement (2) durchgreifende Schraube (18) und ein in dem Halteelement (2) beziehungsweise der Profilhalterung (1) angeordneten Gewinde (19), in welches die Schraube (18) eingreift, gebildet ist.

9. Vorrichtung nach einem der vorhergehenden Ansprüche, **dadurch gekennzeichnet, dass** das Halteelement (2) als eine Profilhalterung (15) mit einer Profilaufnahme (16) ausgebildet ist, welche außerhalb einer Mittelachse (4) der Profilhalterung (15) angeordnet ist.

10. Vorrichtung nach Anspruch 9, **dadurch gekennzeichnet, dass** die Profilaufnahme (3) der Profilhalterung (1) und/oder die Profilaufnahme (16) der Profilhalterung (15) zur klemmenden Aufnahme von Profilen ausgebildet sind.

11. Vorrichtung nach Anspruch 9 oder 10, **dadurch gekennzeichnet, dass** die Profilhalterung (1) und/oder die Profilhalterung (15) aus einem Oberteil (23) und einem Unterteil (25) gebildet sind, welche vorzugsweise mittels wenigstens einem Verstellmittel (24) gegeneinander bewegbar ausgebildet sind, um einen Querschnitt der Profilaufnahmen (3, 16) zu variieren.

12. Vorrichtung nach Anspruch 11, **dadurch gekennzeichnet, dass** das Oberteil (23) und das Unterteil (25) der Profilhalterungen (1, 15) ein- oder mehrteilig ausgebildet sind.

13. Vorrichtung nach einem der Vorhergehenden Ansprüche, **dadurch gekennzeichnet, dass** die Profilaufnahmen (3, 16) der Profilhalterungen (1, 15) zur Aufnahme von im Querschnitt runden, ovalen oder eckigen Profilen ausgebildet sind.
